# EUROPÄISCHE PATENTSCHRIFT

(11) **EP 0 798 501 B1**
(45) Veröffentlichungstag und Bekanntmachung des Hinweises auf die Patenterteilung: **14.06.2000**
(21) Anmeldenummer: 97100836.2
(22) Anmeldetag: 21.01.1997
(51) Int. Cl.: F16K 31/60, G05D 23/02

(54) **Thermostatventil-Kopf für Heizungsanlagen**
Thermostatic valve head for heating installations
Tête de valve thermostatique pour des installations de chauffage

(30) Priorität: 28.03.1996 DE 19612312
(43) Veröffentlichungstag der Anmeldung: 01.10.1997
(73) Patentinhaber: Theodor Heimeier Metallwerk GmbH & Co KG, 59592 Erwitte (DE)
(72) Erfinder: Essfeld, Fritz, 59581 Warstein (DE); Beele, Heinz Eckhard, 59609 Anröchte (DE); Werner, Klaus, 59581 Warstein (DE); Pflüger, Andreas, 59494 Soest (DE)

(56) Entgegenhaltungen:
- EP-A- 0 044 904
- EP-A- 0 504 582
- DE-A- 2 748 412
- DE-A- 3 040 627
- DE-A- 3 124 897
- DE-B- 2 921 522

## Beschreibung

Die Erfindung betrifft einen Thermostatventil-Kopf für Heizungsanlagen nach dem Oberbegriff des Anspruchs 1.

Es sind oberbegriffsmäßige Thermostatventil-Köpfe für Heizungsanlagen, insbesondere für den britischen Markt bekannt, die eine den Temperaturweggeber umgebende Kappe aufweisen. Diese vorbekannten Kappen sind auf ihrer äußeren Umfangsfläche und auf ihrer von Ventil abgewandten Stirnseite geschlossen. Diese topfförmigen Kappen sind aus Metallblech gezogen und bestehen also aus metallischem Material.

Diese vorbekannten Metallkappen machen die Thermostatventil-Köpfe jedoch vergleichsweise fertigungs- und kostenaufwendig, da metallische Werkstoffe grundsätzlich schwieriger zu bearbeiten sind als andere Werkstoffe und da auf Grund des verwendeten Ziehverfahrens die Gestaltungsmöglichkeiten bei derartigen Metallkappen eingeschränkt sind.

Durch die DE 2628307 A 1 ist ein Thermostatventil-Kopf bekannt, bei dem im Bereich des Dehnkörpers ein mit der Umgebungsluft in Verbindung stehender Thermokörper aus hochwärmeleitfähigem Material angeordnet ist. Dieser Thermokörper kann eine Metall-Platte sein die den Dehnkörper sowohl stirnseitig, als auch in Richtung der Längsachse teilweise umgibt. Diese vorbekannte Lösung ist sehr fertigungs- und kostenaufwendig, weil die den Dehnkörper umgebende Kappe mehrteilig gestaltet werden muß.

Es sind auch Thermostatventil-Köpfe für Heizungsanlagen vorbekannt, die eine den Temperaturweggeber umgebende Kappe aus Kunststoffmaterial aufweisen. Diese vorbekannten Kappen sind jedoch nicht an ihrer äußeren Umfangsfläche geschlossen. Vielmehr weisen diese Kappen sowohl an ihrer äußeren Umfangsfläche als auch, zumindest teilweise, an ihrer Stirnfläche schlitzförmige Durchbrechungen auf. Der Grund für diese schlitzförmigen Durchbrechungen war das bisherige Vorurteil der Fachwelt, daß Kunststoffmaterialien auf Grund ihrer gegenüber Metallen wesentlich geringeren Wärmeleitfähigkeit durchbrochen werden müssen, um eine unerwünschte Zeitverzögerung zwischen einer Änderung der Raumtemperatur und einer entsprechenden Hubänderung des Temperaturweggebers zu vermeiden.

Diese vorbekannten Thermostatventil-Köpfe mit durchbrochenen Kunststoffkappen weisen jedoch den Nachteil auf, daß sich in ihren Durchbrechungen Schmutz und Feuchtigkeit ansiedeln kann, was diese vorbekannten Thermostatventil-Köpfe mit der Zeit unansehnlich macht und was die Reinigung dieser Thermostatventil-Köpfe erschwert.

Die Erfindung hat die Aufgabe, einen Thermostatventil-Kopf für Heizungsanlagen zu schaffen, der besonders einfach und kostengünstig herstellbar ist und der hinsichtlich seiner Formgestalt möglichst große Gestaltungsspielräume zuläßt.

Diese Aufgabe wird erfindungsgemäß durch die Kennzeichenmerkmale des Anspruchs 1 gelöst.

Dadurch, daß die Kappe erfindungsgemäß aus Kunststoffmaterial besteht, d h. in dem üblicherweise angewandten Kunststoffspritzverfahren hergestellt ist, ergeben sich hinsichtlich der Formgestalt der Kappe gegenüber dem vorbekannten wesentlich größere Gestaltungsspielräume. Versuche zeigten, daß die Verwendung einer an ihrer äußeren Umfangsfläche geschlossenen Kappe aus Kunststoffmaterial dann möglich ist, wenn die Kappe den Temperaturweggeber klemmend umgreift und insofern zwischen der Wandung des Temperaturweggebers und der Kunststoffkappe nur eine geringe Luftschicht verbleibt.

Dies hat seinen Grund darin, daß nicht das Kunststoffmaterial selbst sondern die Luftschicht zwischen der Kappe und dem Temperaturweggeber die Reaktionsgeschwindigkeit des Temperaturweggebers auf sich ändernde Umgebungstemperaturen bestimmt. Dies ergibt sich daraus, daß Luft als Gasgemisch grundsätzlich einen um Größenordnungen schlechtere Wärmeleitfähigkeit aufweist als jeder Feststoff. Dem gegenüber sind die Unterschiede in der Wärmeleitfähigkeit zwischen metallischem Kappenmaterial oder Kunststoff-Kappenmaterial vernachlässigbar. Die Besonderheit der vorliegenden Erfindung liegt also in der Überwindung dieses Vorurteiles der Fachwelt.

Durch die Ausbildung der Kappe aus Kunststoffmaterial ergibt sich zudem eine deutliche Verbilligung des gesamten Thermostatventil-Kopfes im Herstellungsprozeß. Darüber hinaus trägt auch die Tatsache, daß die Kappe den Temperaturweggeber klemmend umgreift, zu einer weiteren Verbilligung bei, da die üblicherweise bei der Verwendung metallischer Kappen erforderliche zusätzliche Fixierung des Temperaturweggebers in der Kappe entfallen kann.

Vorteilhafte Ausgestaltungen und Weiterbildungen des erfindungsgemäßen Thermostatventil-Kopfes ergeben sich aus den Unteransprüchen.

So kann die Kappe auf ihrer inneren Umfangsfläche im Bereich des Temperaturweggebers glatt ausgebildet sein, falls die gegenüber Metall wesentlich höhere Eigenelastizität des Kunststoffmaterials das klemmende Umgreifen des Temperaturweggebers mittels einer derartigen glatten Innenwandung ermöglicht. Es kann aber auch besonders vorteilhaft die Kappe auf ihrer inneren Umfangsfläche im Bereich des Temperaturweggebers Axialrippen geringer Höhe aufweisen. Die geringe Höhe der Axialrippen soll dabei gewährleisten, daß die sich ergebende Luftschicht zwischen dem Temperaturweggeber und der Kunststoffkappe eine möglichst geringe Wärmedämmung auf Grund der schlechten Wärmeleitfähigkeit des Gasgemisches Luft bewirkt. Die Zwischenräume zwischen den Axialrippen können auch zur Vermeidung der Luftschicht mit Wärmeleitpaste gefüllt werden.

Die Kappe kann auch auf ihrer vom Ventil abgewandten Stirnseite geschlossen sein, wie Versuche gezeigt haben. Die Kappe kann jedoch auch auf ihrer vom Ventil abgewandten Stirnseite Öffnungen aufweisen. Diese Öffnungen können einerseits stilistischen Zwecken dienen. Andererseits können diese Öffnungen auch als Rastöffnungen ausgebildet sein, in die Raststifte eines die Stirnseite bedeckenden Deckels eingreifen. Dieser Deckel kann ebenfalls einerseits stilistischen Zwecken zur besonderen Formgestaltung des Thermostatventil-Kopfes dienen. Andererseits kann ein derartiger Deckel einen Aufdruck tragen, der auf den Hersteller oder den Vertreiber des Thermostatventil-Kopfes hinweist und der auf Grund der beanspruchten Rastverbindung austausch- und an gegebene Verhältnisse anpaßbar ist.

Es ist besonders vorteilhaft, wenn die Kappe einstückig mit dem Betätigungsring aus Kunststoff gespritzt ist und somit gemeinsam mit dem Betätigungsring drehbar ausgebildet ist. Dies ist eine besonders einfache und kostengünstige Lösung, da Kappe und Betätigungsring in diesem Fall nur noch ein glattflächiges einfach entformbares Kunststoffteil darstellen.

Um insbesondere in diesem Fall eine Schwierigkeit bei der Drehbetätigung des Betätigungsringes auf Grund dessen Glattflächigkeit zu vermeiden, kann die Kappe auf ihrer äußeren Umfangsfläche mindestens eine weitere Axialrippe aufweisen, die der Betätigungshand einen Angriffspunkt bietet.

Aus dem selben Grund kann die Kappe auf ihrer äußeren Umfangsfläche mindestens eine Axialnut aufweisen, so daß die beanspruchte Kunststoffkappe eine Umfangsstruktur erhält. In diesem Zusammenhang ist es besonders vorteilhaft, wenn die Axialnuten auf der äußeren Umfangsfläche der Kappe zugleich die Axialrippen auf ihrer inneren Umfangsfläche bilden, um auf besonders einfache und sichere Art und Weise das klemmende Umgreifen des Temperaturweggebers zu gewährleisten.

Ausführungsbeispiele des erfindungsgemäßen Thermostatventil-Kopfes sind in den Zeichnungen dargestellt und werden im folgenden anhand der Zeichnungen näher erläutert.

Es zeigen
- Fig. 1: eine perspektivische Ansicht eines Thermostatventil-Kopfes gemäß der Erfindung in einer ersten Ausführungsform
- Fig. 2: den selben Thermostatventil-Kopf in einer Seitenansicht
- Fig. 3: einen Schnitt durch den Thermostatventil-Kopf gemäß Fig. 2 gemäß der Schnittlinie A-A
- Fig. 4: den selben Radialschnitt wie in Fig. 3 bezüglich einer ersten abgewandelten Ausführungsform und
- Fig. 5: den selben Axialschnitt gemäß Fig. 3 in einer zweiten abgewandelten Ausführungsform.

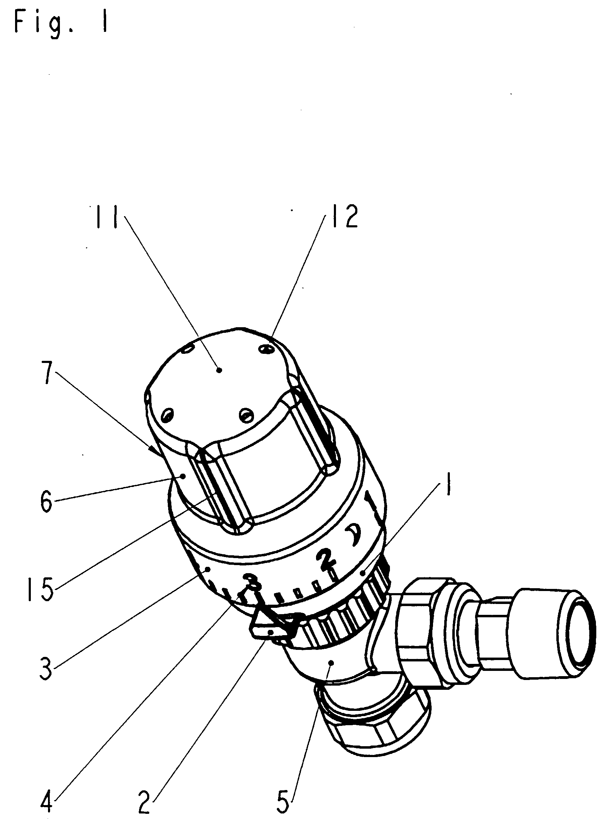

In der Fig. 1 weist der Thermostatventil-Kopf ein ventilseitiges Anschlußteil (1) auf, das einen Drehstellungsanzeiger (2) trägt. Dieser Drehstellungsanzeiger (2) korrespondiert mit Drehstellungsmarkierungen (4), die auf einem zylindrischen Betätigungsring (3) aus Kunststoffmaterial angeordnet sind. Auf der von dem Ventil (5) abgewandten Seite des Thermostatventil-Kopfes ist eine Kappe (6) angeordnet, die einstückig mit dem Betätigungsring (3) aus Kunststoff gespritzt ist.

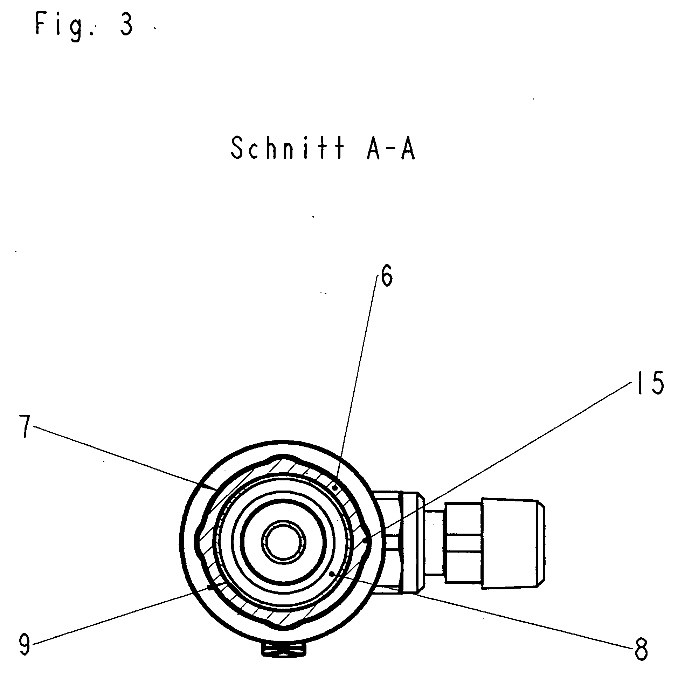

Die Kappe (6) ist dabei auf ihrer äußeren Umfangsfläche geschlossen ausgebildet, so daß sich eine glatte, nahezu zylindrische Oberfläche ohne Schlitze und Öffnungen ergibt. Die Kappe (6) ist, wie vorher bereits erläutert, aus Kunststoffmaterial gespritzt und umgreift den Temperaturweggeber (8) in den Fig. 3 bis 5 klemmend, so daß der Temperaturweggeber (8) in der Kappe (6) fixiert ist.

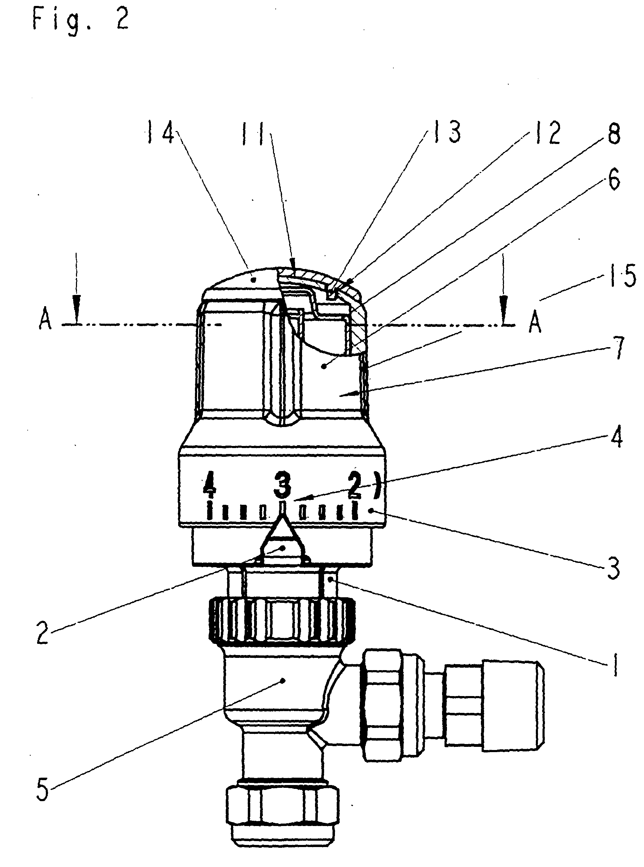

Aus der Fig. 2 wird ersichtlich, daß die vom Ventil (5) abgewandte Stirnseite (11) der Kappe (6) Öffnungen (12) aufweist, die als Rastöffnungen ausgebildet sind. In diese Rastöffnungen (12) greifen Raststifte (13) eines Deckels (14) ein, der die Stirnseite (11) der Kappe (6) abdeckt. Dieser Deckel (14) kann Bedruckungen, z. B. als Hinweis auf den Hersteller des Thermostatventil-Kopfes oder dessen Vertreiber, tragen.

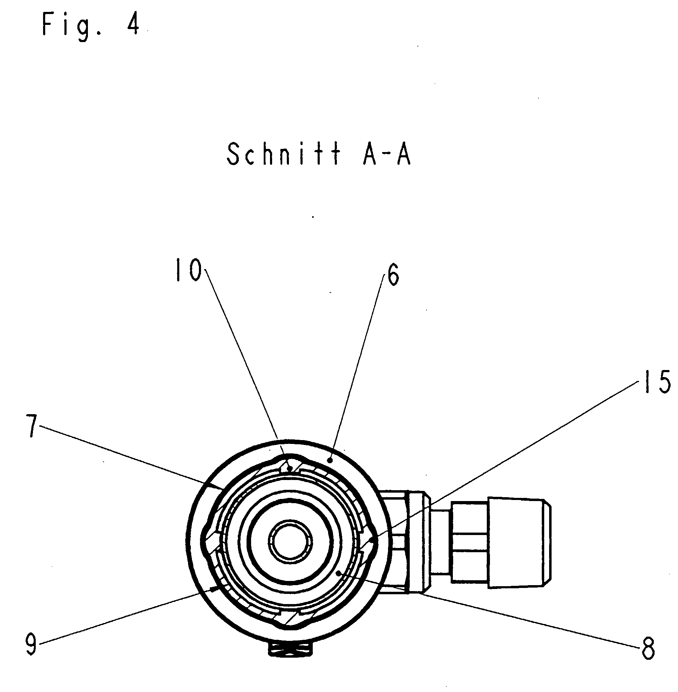

Schließlich trägt die Kappe (6) des Thermostatventil-Kopfes gemäß der Fig. 1 und Fig. 2 auf ihrer äußeren Umfangsfläche (7) zweite Axialrippen (15), die die Drehhandhabung der Kappe (6) einstückig mit dem Betätigungsring (3) erleichtern sollen und deren Formgestalt näher aus den Fig. 3 und 4 hervorgeht.

In der Fig. 3 sind gleiche oder gleichwirkende Einrichtungsteile wie in den Fig. 1 und 2 mit den selben Bezugszeichen dargestellt. Aus dem Querschnitt der Fig. 3 gemäß der Schnittlinie A-A in Fig. 2 geht hervor, daß die Kappe (6) an ihrer äußeren Umfangsfläche (7) die zweiten Axialrippen (15) trägt. Bei der Ausführungsform der Kappe (6) gemäß Fig. 3 ist eine innere Umfangsfläche (9) der Kappe (6) glatt ausgebildet. Die Kappe (6) umgreift mit ihrer glatten inneren Umfangsfläche (9) einen Temperaturweggeber (8) klemmend.

In der Fig. 4, die ebenfalls einen Querschnitt durch die Kappe (6) vergleichbar mit der Schnittlinie A-A in Fig. 2 zeigt, sind ebenfalls gleiche oder gleichwirkende Einrichtungsteile wie in den Fig. 1 bis 3 mit den selben Bezugszeichen versehen. Man erkennt in der Fig. 4, daß dort die innere Umfangsfläche (9) der Kappe (6) erste Axialrippen (10) aufweist, wobei die Axialrippen (10) den Temperaturweggeber (8) klemmend umgreifen. Die Axialrippen (10) weisen dabei eine sehr geringe Höhe auf, um das sich zwischen dem Temperaturweggeber (8) und der Kappe (6) ergebende Luftpolster möglichst gering zu halten, so daß eine thermische Isolierung des Temperaturweggebers (8) von der Kappe (6) weitgehend vermieden wird. Damit wird vermieden, daß der Thermostatventil-Kopf gemäß Fig. 4 ein gegenüber der Lösung gemäß Fig. 3 schlechteres Ansprechverhalten auf Temperaturänderungen aufweist. Zudem weist die Kappe (6) gemäß Fig. 4, wie vorher bereits erläutert, zweite Axialrippen (15) zur Erleichterung der Drehhandhabe des Thermostatventil-Kopfes auf.

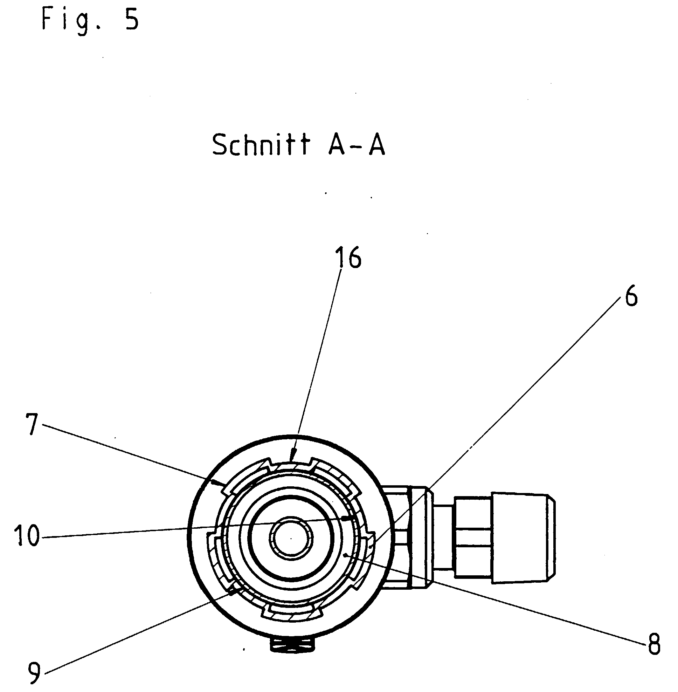

Ebenfalls der Erleichterung der Drehhandhabe der Kappe (6) gemeinsam mit dem Betätigungsring (3) dienen die Axialnuten (16), die in der Fig. 5 dargestellt sind. In der Fig. 5 sind ebenfalls gleiche oder gleichwirkende Einrichtungsteile wie in den Fig. 1 bis 4 mit den selben Bezugszeichen dargestellt. Hierbei sind die Axialnuten (16) auf der äußeren Umfangsfläche (7) der Kappe (6) derart angeordnet und ausgebildet, daß sie zugleich die Axialrippen (10) auf der inneren Umfangsfläche (9) der Kappe (6) bilden, so daß mit dieser Maßnahme einerseits die erleichterte Drehhandhabe der Kappe (6) und anderseits das möglichst sichere klemmende Umgreifen des Temperaturweggebers (8) durch die Kappe (6) gewährleistet ist.

## Patentansprüche

1. Thermostatventil-Kopf für Heizungsanlagen mit einem ventilseitigen Anschlußteil (1), das einen Drehstellungsanzeiger (2) aufweist, mit einem gegenüber dem Anschlußteil (1) drehbaren Betätigungsring (3), der Drehstellungsmarkierungen (4) aufweist und mit einer vom ventilseitigen Anschlußteil (1) abgewandten Kappe (6), die auf ihrer äußeren Umfangsfläche (7) geschlossen ist und die einen Temperaturweggeber (8) umgibt, dadurch gekennzeichnet, daß die Kappe (6) aus Kunststoffmaterial besteht und daß die Kappe (6) den Temperaturweggeber (8) klemmend umgreift.

2. Thermostatventil-Kopf nach Anspruch 1, dadurch gekennzeichnet, daß die Kappe (6) auf ihrer inneren Umfangsfläche (9) im Bereich des Temperaturweggebers (8) glatt ausgebildet ist.

3. Thermostatventil-Kopf nach Anspruch 1, dadurch gekennzeichnet, daß die Kappe (6) auf ihrer inneren Umfangsfläche (9) im Bereich des Temperaturweggebers (8) Axialrippen (10) geringer Höhe aufweist.

4. Thermostatventil-Kopf nach Anspruch 1, dadurch gekennzeichnet, daß die Kappe (6) auf ihrer vom Ventil (5) abgewandten Stirnseite (11) geschlossen ist.

5. Thermostatventil-Kopf nach Anspruch 1, dadurch gekennzeichnet, daß die Kappe (6) auf ihrer vom Ventil (5) abgewandten Stirnseite (11) Öffnungen (12) aufweist.

6. Thermostatventil-Kopf nach Anspruch 5, dadurch gekennzeichnet, daß die Öffnungen (12) Rastöffnungen sind, in die Raststifte (13) eines die Stirnseite (11) bedeckenden Deckels (14) eingreifen.

7. Thermostatventil-Kopf nach Anspruch 1, dadurch gekennzeichnet, daß die Kappe (6) einstückig mit dem Betätigungsring (3) und mit diesem drehbar ausgebildet ist.

8. Thermostatventil-Kopf nach Anspruch 1, dadurch gekennzeichnet, daß die Kappe (6) auf ihrer äußeren Umfangsfläche (7) mindestens eine weitere Axialrippe (15) aufweist.

9. Thermostatventil-Kopf nach Anspruch 1, dadurch gekennzeichnet, daß die Kappe (6) auf ihrer äußeren Umfangsfläche (7) mindestens eine Axialnut (16) aufweist.

10. Thermostatventil-Kopf nach Anspruch 3 und Anspruch 9, dadurch gekennzeichnet, daß die Axialnuten (16) auf der äußeren Umfangsfläche (7) der Kappe (6) zugleich die Axialrippen (10) auf ihrer inneren Umfangsfläche (9) bilden.

11. Thermostatventil-Kopf nach Anspruch 3, dadurch gekennzeichnet, daß die Hohlräume zwischen den Axialrippen (10) mit Wärmeleitpaste gefüllt sind.

## Claims

1. Thermostatic valve head for heating installations, having a connecting portion (1) on the valve side, which comprises a rotary position indicator (2), an actuating ring (3) rotatable with respect to the connecting portion (1), which actuating ring (3) comprises rotary position marks (4), and a cap (6) remote from the connecting portion (1) on the valve side, which cap (6) is continuous on its outer circumferential surface (7) and surrounds a thermal displacement sensor (8), characterised in that the cap (6) consists of plastics material and in that the cap (6) encloses the thermal displacement sensor (8) in clamping manner.

2. A thermostatic valve head according to claim 1, characterised in that the cap (6) is of smooth construction on its inner circumferential surface (9) in the area of the thermal displacement sensor (8).

3. A thermostatic valve head according to claim 1, characterised in that the cap 16) comprises slightly elevated axial ribs (10) on its inner circumferential surface (9) in the area of the thermal displacement sensor (8).

4. A thermostatic valve head according to claim 1, characterised in that the cap 16) is continuous over its end face (11) remote from the valve (5).

5. A thermostatic valve head according to claim 1, characterised in that the cap (6) comprises openings (12) on its end face (11) remote from the valve (5).

6. A thermostatic valve head according to claim 5, characterised in that the openings (12) are snap-in openings in which engage the strap-in pins (13) on a lid (14) covering the end face (11).

7. A thermostatic valve head according to claim 1, characterised in that the cap (6) is in one piece with the actuating ring (3) and may be rotated therewith.

8. A thermostatic valve head according to claim 1, characterised in that the cap (6) comprises at least one further axial rib (15) on :.ts outer circumferential surface (7).

9. A thermostatic valve head according to claim 1, characterised in that the cap (6) comprises at least one axial groove (16) on its outer circumferential surface (7) .

10. A thermostatic valve head according to claim 3 and claim 9, characterised in that the axial grooves (16) on the outer circumferential surface (7) of the cap (6) at the same time constitute the axial ribs (10) on the inner circumferential surface (9) thereof.

11. A thermostatic valve head according to claim 3, characterised in that the cavities between the axial ribs (10) are filled with heat conducting paste.

## Revendications

1. Tête de robinet thermostatique pour des installations de chauffage, comportant un raccord (1) qui est situé du côté robinet et présente un indicateur (2) de position en rotation, ainsi qu'une bague de manoeuvre (3) qui peut tourner par rapport au raccord (1) et présente des repères de position en rotation (4) et qu'un capuchon qui est situé du côté opposé au raccord (1) situé du côté robinet, est fermé sur sa surface périphérique extérieure (7) et entoure un prescripteur de correction de température (8), caractérisée par le fait que le capuchon (6) est constitué d'un matériau plastique et que le capuchon (6) enserre, en s'y attachant, le prescripteur de correction de température (8).

2. Tête de robinet thermostatique selon la revendication 1, caractérisée par le fait que le capuchon (6) est prévu lisse sur sa surface périphérique intérieure (9) dans la zone du prescripteur de correction de température (8).

3. Tête de robinet thermostatique selon la revendication 1, caractérisée par le fait que le capuchon (6) présente des nervures axiales (10) sur sa surface périphérique intérieure (9) dans la zone du prescripteur de correction de température (8).

4. Tête de robinet thermostatique selon la revendication 1, caractérisée par le fait que le capuchon (6) est fermé sur sa face frontale (11) située du côté opposé au robinet (5).

5. Tête de robinet thermostatique selon la revendication 1, caractérisée par le fait que le capuchon (6) présente des ouvertures (12) sur sa face frontale (11) située du côté opposé au robinet (5).

6. Tête de robinet thermostatique selon la revendication 5, caractérisée par le fait que les ouvertures (12) sont des ouvertures de crantage dans lesquelles viennent en prise des tétons de crantage (13) d'un couvercle (14) qui recouvre la face frontale (11).

7. Tête de robinet thermostatique selon la revendication 1, caractérisée par le fait que le capuchon (6) est prévu d'une seule pièce avec la bague de manoeuvre (3) et peut être entraîné en rotation avec celle-ci.

8. Tête de robinet thermostatique selon la revendication 1, caractérisée par le fait que le capuchon (6) présente sur sa face périphérique extérieure (7) au moins une autre nervure axiale (15).

9. Tête de robinet thermostatique selon la revendication 1, caractérisée par le fait que le capuchon (6) présente sur sa face périphérique extérieure (7) au moins une rainure axiale (16).

10. Tête de robinet thermostatique selon la revendication 3 et la revendication 9, caractérisée par le fait que les rainures axiales (16) qui sont sur la surface périphérique extérieure (7) du capuchon (6) forment en même temps les nervures axiales (10) qui sont sur surface périphérique intérieure (9).

11. Tête de robinet thermostatique selon la revendication 3, caractérisée par le fait que les espaces creux situés entre les nervures axiales (10) sont remplis d'une pâte conductrice de la chaleur.
